# EUROPEAN PATENT SPECIFICATION

(11) **EP 0 425 125 B1**
(45) Date of publication and mention of the grant of the patent: **17.04.1996**
(21) Application number: 90311103.7
(22) Date of filing: 10.10.1990
(51) Int. Cl.: G11B 27/30, G11B 11/10, G11B 19/04

(54) **System with a multi-function optical disk and drive for it**
System mit einer multifunktionalen Platte und derselben Antrieb
Système à disque optique multifonctionnel et entraînement pour celui-ci

(30) Priority: 25.10.1989 US 426834
(43) Date of publication of application: 02.05.1991
(73) Proprietor: Hewlett-Packard Company, Palo Alto, California 94304 (US)
(72) Inventor: Curtis, Hoyle L., Colorado 80538 (US); Loseke, Terry L., Loveland, Colorado 80538 (US)
(74) Representative: Colgan, Stephen James

(56) References cited:
- EP-A- 0 216 704
- EP-A- 0 227 530
- EP-A- 0 232 134
- PATENT ABSTRACTS OF JAPAN vol. 8, no. 121 (P-278)(1558) 7 June 1984 & JP-A-59 028 248
- PATENT ABSTRACTS OF JAPAN vol. 8, no. 282 (P-323)(1719) 22 December 1984 & JP-A-59 146 446

## Description

### BACKGROUND OF THE INVENTION

This invention relates to data storage devices and more particularly to optical disk data storage devices. Even more particularly, the invention relates to an apparatus and method for restricting the writing of information on optical disk media.

An optical disk is a data storage medium which is readable by a laser-based reading device. Optical disks, known as "compact disks" or "CD's", have become increasingly popular during the last few years for recording music and audio-visual works. Due to the huge storage capacity of optical disks as compared to conventional magnetic storage media, optical disks known as "ROM disks" have become popular for storing computer readable information. Recent technology has produced optical disks which can be written as well as read by the computer, thus, in the future optical disks are expected to become increasingly more important in the computer industry and may eventually replace magnetically readable and writable storage media such as "floppy disks" and "hard disks". Optical disks of the type used in computer applications are generally mounted in cartridges, and the reading devices generally read or write data through a slot provided on a surface of the cartridge.

One type of optical disk is often called "WORM" disks for Write-Once-Read-Many. WORM media is a type that can be written but cannot be erased, therefore, it can be written only once. If an attempt is made to write on this media a second or subsequent times, the new data is written over the old data, resulting in garbled data which is unintelligible. A significant need exists for WORM media, however. This type of media is very useful for archive storage of data, wherein the data is intended to be written only once and never erased. A very significant aspect of WORM media, is that it always leaves an audit trail. Since it can only be written once, the data in a sector will always be the original data written in the sector. If a rewrite of the sector was attempted, it will be obvious from the garbled data and the CRC check data, which will be incorrect. In no case can the data in a sector be changed without leaving evidence of the change.

Recently a new type of optical disk media has been developed, called magneto-optic media or "MO" media. This type of media can be written, erased, and rewritten many times, in the same manner as magnetic media. Magneto-optic media is very important as a direct replacement for magnetic media, since it performs the same functions and allows a much larger storage capacity on a given disk.

Both types of media have important applications, however, it is very difficult and costly to design a single disk drive that can process both types of media. Therefore, if a computer needs to process both types of media two completely independent disk storage drives are needed.

There is a need then for a single media which can function either as WORM media, or as rewritable media. A similar problem has been addressed with magnetic media. Floppy disks for example, have a write protect notch which, if covered, prevents writing on the media. Therefore, a device can write on the media while the notch is uncovered, and then the notch can be covered to make the media "read-only". Magnetic tape has solved this problem in a similar way with a write ring, or in the case of tape cartridges with a record slide switch. These methods all suffer from the same drawback, that is, the mechanism is very easily reversed to make the media writable once again. In many operating systems, for example DOS on personal computers, a file can be marked as readonly after it has been initially written. Again, however, the read-only status is very temporary and can easily be reversed with another operating system command. Because the mechanism is easily reversed in all these cases, there is no audit trail.

This problem has also been partially addressed in a device, manufactured by Canon, Inc., called the "Canofile 250". This device allows an entire disk to be formatted as write-once. This device would appear to have a serious drawback, however, since the process of formatting a disk is usually done by an operation system within the computer. This means that the write-once format is known only to that operation system, and other operating systems, not knowing of this format, might write over the media, leaving no audit trail. Another problem with this device is that the write-once status only applies to the entire media, therefore the media cannot be divided into write-once and rewritable portions.

Another problem that exists in converting rewritable media to write-once media is that drives that were manufactured prior to the design of the convertible media will not understand that the media is convertible and may write on the media even though it has been marked as read-only. This problem is similar to the above described problem wherein the operating system simply sets a bit identifying a file as read-only. Because the previously manufactured drive is unaware of the mechanism by which the media is converted to read-only, it will ignore such mechanism and write on the media. Therefore, one of the most difficult problems being faced in providing a convertible media, is the problem of designing a mechanism which will be recognized by previously manufactured drives.

It is very desireable, then, to provide a system that will allow media to be converted from rewritable media to write-once media. Because the nature of its construction, WORM media is incapable of being written to more than once. Magneto-optic media, however, can be rewritten many times. Therefore, there is need in the art to provide apparatus and method for allowing magneto-optic media to be converted to write-once media. There is a further need in the art for allowing portions of the media to be converted to read-only, while retaining other portions of the media as rewritable. A still further need in the art is to allow each sector of the magneto-optic media to be independently converted to read-only. Yet another need in the art is to provide such an apparatus and method that prevents previously manufactured magneto-optic read/write drives from continuing to use the media as rewritable.

EP-A-0 216 704 discloses an optical writing and reading method and apparatus for writing data on a recording medium. To prevent an over-writing of data, a mark is written to indicate that data is already written, the mark is being written on a mark recording region before writing data. Simultaneously with the writing of the mark, the light quantity reflected from the mark recording region is detected (by a detector) and is compared to a reference level (by a comparator) to inhibit subsequent data writing through write amplifier when the result of comparison indicates that data is already written.

### SUMMARY OF THE INVENTION

Objects of the invention are:
(a) to restrict the writing of data on optical media;
(b) to prevent the media from being written by optical storage devices that were manufactured before such media was available;
(c) to provide apparatus and method for defining writable media as read-only media;
(d) to define portions of writable media as read-only media;
(e) dynamically to change a portion of the media from writable to read-only; and
(f) to define writable media wherein each data sector of such media can be redefined from writable to read-only.

Features of the invention are defined by Claims 1 and 7.

In a preferred embodiment of the invention, a media descriptor table, contained within a control track of the media, is modified to define the media as a new media type. All standard 5.25 inch optical disk media contains such a control track, which is defined by an ISO standard. By defining a new media type in the media descriptor table of the control track, previously manufactured drives will not recognize the media type, and therefore, will not read or write on the media. Because previously drives will not read or write on the media, they will not disturb the writable or read-only state of the media.

In addition to defining a new media type, the invention also defines a storage state bit within each sector of each track of the media. In a first embodiment, this bit defines whether the sector is writable or read-only. With this bit set into the writable state, the sector can be written many times. Once the bit is changed to read-only, however, the sector can no longer be written. The invention also defines that this bit may not be reset, once it is set into the read-only state. Therefore, the sector can be used many times until the storage state bit is once set into the read-only mode, and thereafter the sector must remain only in the read-only mode.

In a second embodiment, the storage state bit is used to indicate whether or not the sector has been written. Once data is written to the sector, the bit is set to indicate that the sector has been written, and the sector may not be written again. Thus, this second embodiment defines the media as write-once-read-many or WORM.

The invention defines two locations for the storage state bit. In one embodiment of the invention the storage state bit is located in the sector mark field area of each sector prior to the data portion of the sector. By placing the bit in the sector mark field, the drive will be able to write the bit and continue to write data on a single revolution.

In another embodiment of the invention, the storage state bit is placed in the data field area of each sector. By placing the bit in the data sector, no changes are required to the hardware of the drive, so this implementation can be performed completely within the drive firmware.

Using the above described apparatus and method, the invention provides the same level of security and auditability as current WORM drives. In addition, a drive containing the invention would be less expensive and simpler to design and manufacture than a drive that will accept either WORM or magnet-optic media.

### BRIEF DESCRIPTION OF THE DRAWINGS

The above and other objects, features, and advantages of the invention will be better understood by reading the following more particular description of the invention, presented in conjunction with the following drawings, wherein:
Fig. 1 is a block diagram of a computer system that incorporates the present invention;
Fig. 2 is a diagram of an optical disk for use with the present invention;
Figs. 3 and 4 show the format of the control track of the disk of Fig. 2;
Fig. 5 is a flowchart of the process by which the firmware in the controller of the invention determines the media type; and
Fig. 6 is a flowchart of the process of writing a data sector in the present invention.

### DESCRIPTION OF THE PREFERRED EMBODIMENT

The following description is of the best presently contemplated mode of carrying out the present invention. This description is not to be taken in a limiting sense but is made merely for the purpose of describing the general principles of the invention. The scope of the invention should be determined by referencing the appended claims.

In general, the present provides an apparatus and method for allowing writable data storage media to be defined as read-only. In order to prevent previously manufactured data storage devices from writing on the media, the media is defined, using a control track, to be a new type of media. Therefore, previously manufactured drives, not recognizing the new type of media, will not write on it. Each sector of the new media type contains a storage state bit which defines whether the sector can be written to or is read-only. In a first embodiment, with this bit set in the writable state, the sector can be written to as many times as desired. Once the storage state bit has been change to the read-only state, the drive will no longer write data into this sector. The drive will not allow the bit to be changed from the read-only state back to the writable state.

In a second embodiment, the storage state bit is used to indicate whether or not the sector has been written. Once data is written to the sector, the bit is set to indicate that the sector has been written, and the sector may not be written again. Thus, this second embodiment defines the media as write-once-read-many or WORM.

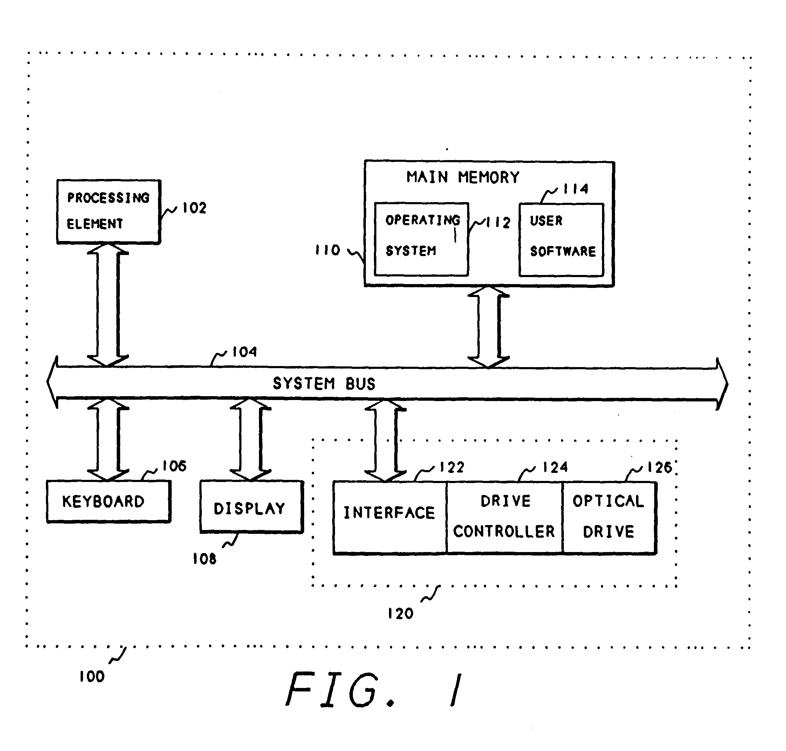

Fig. 1 shows a block diagram of a computer system that incorporates the present invention. Referring now to Fig. 1, a computer system 100 is shown having a processing element 102. Data is transferred between the processing element 102 and all other parts of the system by a system bus 104. Attached to the system bus 104 is a keyboard 106 which allows a user to input data to the computer system 100. Also attached to the system bus 104 is a display 108 which allows the computer system 100 to display data to the user. A main memory 110 is attached to the system 104 and is used to store data and programs. Stored in the main memory 110 is an operating system 112 and user software 114. Also attached to the system bus 104 is the optical data storage device 120 of the present invention. Within the optical data storage device 120 is an interface 122 which connects the optical data storage device 120 to the system bus 104. Attached to the interface 122 is the drive controller 124 which contains all the electronics and firmware for controlling the optical drive 126.

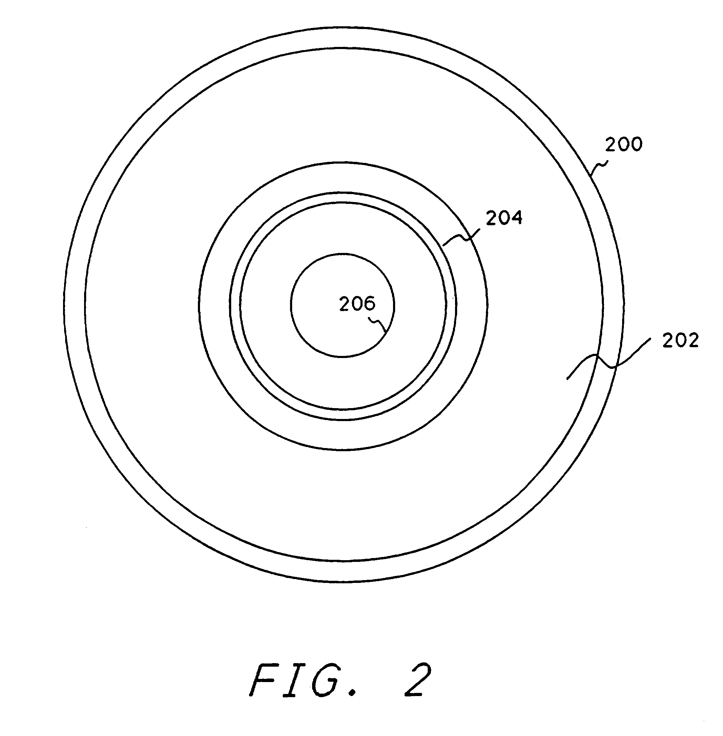

Fig. 2 is a diagram of an optical disk storage media suitable for use with the present invention. Referring now to Fig. 2, disk 200 contains a data storage area 202 used to store user data in sectors. Outside the data storage area 202, and located toward the center of the disk 200, is a control track 204 which contains the media descriptor table of the present invention. A center hole 206 is used to center the media on the spindle of the optical drive 126 (Fig. 1). The disk 200 is typically surrounded by a cartridge (not shown) to protect the disk during storage. The data storage area 202 and the control track 204 are accessible through a slot in the cartridge.

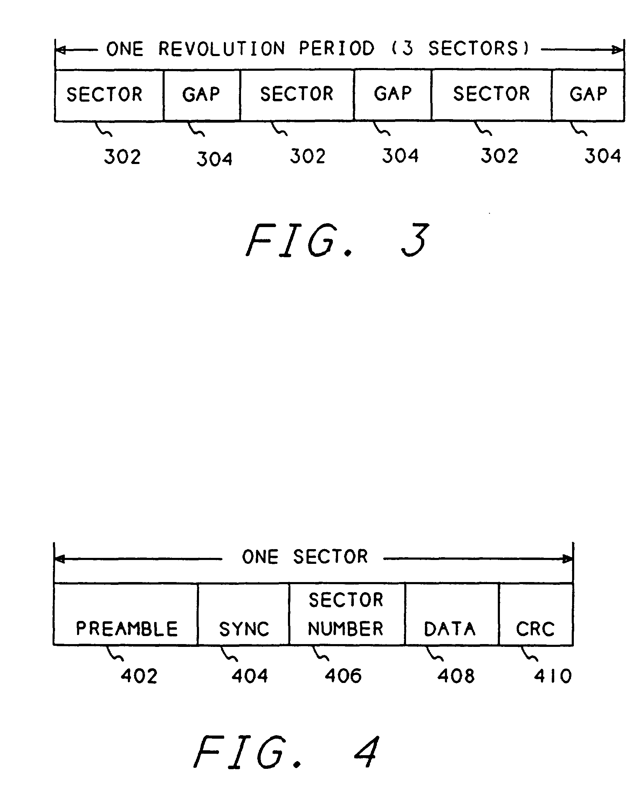

Fig. 3 is a description of the PEP zone of the control track 204 of Fig. 2. Referring now to Fig. 3, the format of the control track 204 is shown having three identical sectors 302, each of which contains one hundred seventy-seven (177) bits of data. The sectors are called the media descriptor table. The sectors 302 are separated by a gap 304 which is of a length that would contain ten to twelve bits of data, however, the gap 304 is left unrecorded. The format of this control track is defined by ISO standard 10089.

Fig. 4 is a diagram of one of the sectors 302 of Fig. 3. Referring now to Fig. 4, the sector is shown having a preamble 402 which is comprised of sixteen bits. The preamble 402 is followed by a sync area 404 which is one bit, and it is followed by a sector number 406 which is eight bits. The sector number 406 is followed by the data area 408 which is comprised of one hundred forty-four (144) bits, and the sector is completed with a CRC field 410 comprised of eight bits. The data field 410 is comprised of eighteen bytes of data, each of which contains eights bits. Byte seven of this data contains the media identification byte, which, in the present invention, identifies the media as both WORM and magneto-optic, to provide for the media being either type depending on the setting of the storage state bits.

The ISO standard defined above also defines the format of sector data within the media of the optical disk. Within this definition, each sector contains an ODF flag which is suitable for use in storing the storage state bit of the present invention. For the second embodiment of the present invention, wherein the storage state bit is stored within the data portion of the each sector, the bit would be stored in any one of a set of 12 pointer bytes designated as P1.1, P1.2, P1.3, P1.4, P2.1, P2.2, P2.3, P2.4, P3.1, P3.2, P3.3, P3.4. Since these bytes are not used in the ISO standard, any one of the bits in these bytes can be used for the storage state bit.

In other embodiments, the storage state bits could be stored elsewhere on the media. For example, these bits could be stored together in a first area of the media, or they could be stored on a separate rewritable control track.

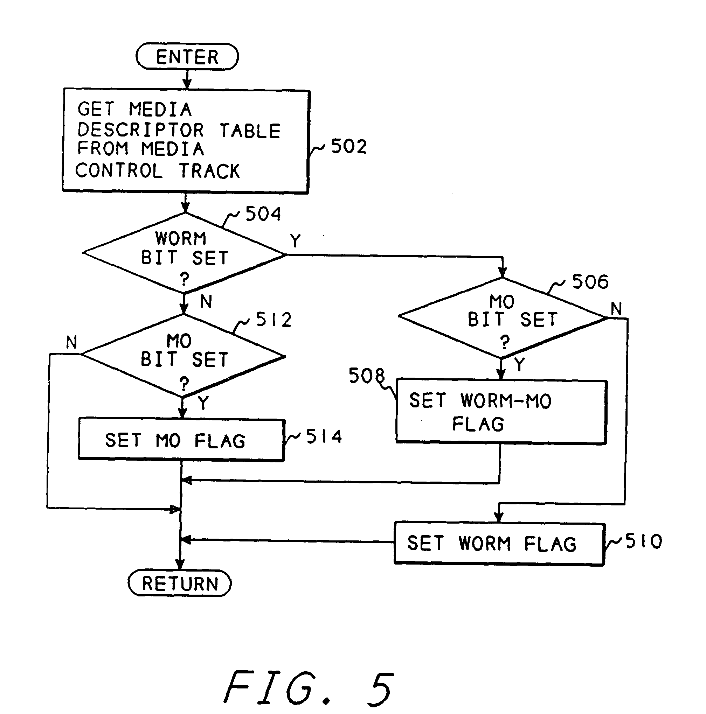

Fig. 5 is a flowchart of the process used by the firmware within the drive controller 124 (Fig. 1) to determine the type of media that has been inserted into the optical drive 126 (Fig. 1). The process of Fig. 5 will be called by the firmware within the drive controller, after such firmware determines that new media has been inserted into the drive, and the media has been brought up to operational speed. Referring now to Fig. 5, after entry, block 502 reads the control track 204 (Fig. 2) from the media and extracts the media descriptor table from such control track. As described earlier, media suitable for use with the present invention will have both the WORM bit and the magneto-optic (MO) bits set in the media descriptor table. Any other unique combination of bits would also serve to identify the media as a new type suitable for use with the present invention. Block 504 checks byte seven of the media descriptor table, to determine if the WORM bit is set. If the WORM bit is set, block 504 transfers to block 506 which determines whether the magneto-optic bit has been set. If the magneto-optic bit has been set, block 506 transfers to block 508 which sets a flag indicating that the media is identified as both WORM and magneto-optic, and therefore is suitable for use with the present invention. Block 508 then returns to the caller. If the magneto-optic bit was not set, block 506 transfers to block 510 which sets a flag indicating that the media should be treated as WORM media. Therefore, the optical drive 126 will not write on the media, but instead will treat the entire media as read-only. Block 510 then returns to the caller.

If block 504 determined that the WORM bit was not set, block 504 transfers to block 512 which checks the magneto-optic bit. If the MO flag is set, block 512 transfers to block 514 which sets the magneto-optic flag. With the magneto-optic flag set, the optical drive 126 will treat the entire media as if it is writable and will not look for storage state bits within the sectors of the media. After setting the MO flag, block 514 returns to the caller. If block 512 determines that the magneto-optic bit is not set, block 512 returns to the caller without setting any flags. With no flags set, the optical drive 126 will eject the media as not suitable for its use.

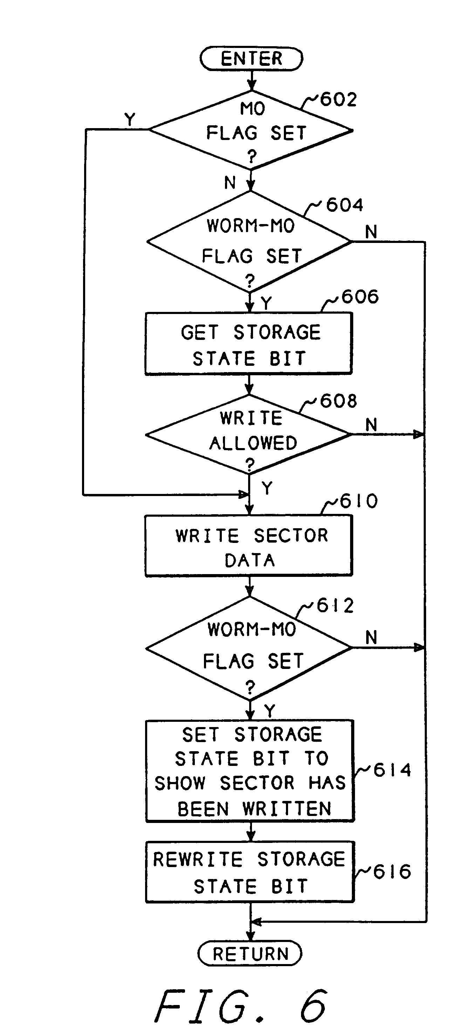

Fig. 6 is flowchart of the process of writing a sector in the present invention. Referring now to Fig. 6, after entry, block 602 determines whether the magneto-optic flag is set. If the magneto-optic flag is set, any sector on the media can be written at any time, therefore, block 602 transfers directly to block 610 to write the sector. If the magneto-optic flag is not set, block 602 transfers to block 604 which checks the WORM-MO flag to see if it is set. If the WORM-MO flag is not set, this media is not suitable to written on, therefore, block 604 returns to the caller. If the WORM-MO flag is set, block 604 transfers to block 606 to get the rewritable flag from either the sector flag area or the data area of the sector depending on the embodiment being used. Block 608 then checks this flag to see if writing is allowed. If writing is not allowed, block 608 returns to the caller. If writing is allowed, block 608 transfers to block 610 which writes the data in the sector. Block 612 then checks the WORM-MO flag again because both magneto-optic media and WORM-MO media will cause the process to pass through block 610. If the WORM-MO flag is not set, block 612 simply returns to caller because this is magneto-optic media. If the WORM-MO flag is set, block 612 transfers to block 614 to set the storage state bit to show that the sector is now read-only. Block 616 then rewrites the rewritable flag onto the media and returns to the caller.

Although the process of Fig. 6 allows a sector to be written only once, the process could be defined to allow writing of a sector many times, until a "change-state" command is received for the sector. This command would change the storage state bit to read-only and, thereafter, the drive would not write data into the sector. The change-state command would not change the storage state from read-only to writable.

The disclosures and the description herein are intended to be illustrative for the invention, which is defined by the following claims.

## Claims

1. An optical disk data reading and writing system which enables a rewritable optical disk to be defined, on at least parts thereof as a write-once disk, said system comprising:
a data storage device (126) for reading and writing said data; and
a rewritable optical disk (200) disposed in said data storage device (126);
said optical disk (200) comprising:
a control track (204); and
storage data bit means for defining a storage state for each of a plurality of predefined data storage portions of the disk (200), each storage state indicating that its associated portion is either writable or read-only;
said data storage device (126) comprising:
means for preventing writing to any one of said predefined portions of said disk (200) when said storage state indicates that the portion is in a read-only state; characterised by a disk type identification byte in the control track of said optical disk for defining the disk (200) as being of a type which is both rewritable and write-once; means in said data storage device for identifying the disk (200) as a type, which is both rewritable and write-once, from said disk type identification byte; and
means for irrevocably preventing any one of the storage states of the disk (200), when said identification has been made, from being changed from read-only to writable.

2. The system of Claim 1 further comprising means for changing said storage state to read-only when said portion is first written.

3. The system of Claim 1 wherein said plurality of predefined portions of said data storage media comprise data storage sectors.

4. The system of Claim 3 wherein said storage data bit means comprises a bit in a sector mark field of said data storage sectors.

5. The system of Claim 3 wherein said storage data bit means comprises a bit in a data field of said data storage sectors.

6. The system of Claim 1 wherein said disk type identification byte comprises a predefined bit in said control track of said rewritable disk (200).

7. A process for defining a rewritable optical disk (200) as write-once using a control track (204) and for storing data thereon, said process comprising the steps of:
defining a disk type which is both rewritable and write-once by a disk type identification byte in said control track (204) of said disk (200) ;
subdividing said disk into a plurality of portions, each of said portions being definable as writable or read-only;
defining a storage state bit for each of said portions for indicating whether the associated portion is writable or read-only;
examining said disk type and said storage state bit prior to a write operation to one of said subdivided portions;
when said disk type identification byte indicates that the disk is of the type which is both rewritable and write-once, and when said storage state bit also indicates that said portion already contains data stored thereon, cancelling said write operation; and
when said disk type identification byte indicates that the disk is of the type which is both rewritable and write-once, and when said storage state bit also indicates that said portion does not contain data stored thereon, proceeding with said write operation, and after said write operation is complete, irrevocably setting said storage state bit to indicate that data has been stored thereon.

8. The process of Claim 7 further comprising the step of:
defining said portions as sectors within said disk.

9. The process of Claim 8 further comprising the step of:
defining said storage state bit in a sector mark field in said sector.

10. The process of Claim 8 further comprising the step of:
defining said storage state bit in a data field in said sector.

## Patentansprüche

1. Ein optisches Plattensystem zum Lesen und Schreiben von Daten, welches es ermöglicht, daß eine wiederbeschreibbare optische Platte auf mindestens Teilen derselben als eine Einmal-Schreiben-Platte definiert wird, wobei das System folgende Merkmale aufweist:
ein Datenspeicherungsgerät (126) zum Lesen und Schreiben der Daten; und
eine wiederbeschreibbare optische Platte (200), die in dem Datenspeicherungsgerät (126) angeordnet ist;
wobei die optische Platte (200) folgende Merkmale aufweist:
eine Steuerspur (204); und
eine Speicherungsdatenbiteinrichtung zum Definieren eines Speicherungszustands für jeden einer Mehrzahl von vordefinierten Datenspeicherungsabschnitten der Platte (200) , wobei jeder Speicherungszustand anzeigt, daß sein zugeordneter Abschnitt entweder ein beschreibbarer oder ein Nur-Lesen-Abschnitt ist;
wobei das Datenspeicherungsgerät (126) folgendes Merkmal aufweist:
eine Einrichtung zum Verhindern des Schreibens auf irgendeinen der vordefinierten Abschnitte der Platte (200), wenn der Speicherungszustand anzeigt, daß der Abschnitt in einem Nur-Lesen-Zustand ist;
gekennzeichnet durch
ein Plattentyp-Identifikationsbyte in der Steuerspur der optischen Platte zum Definieren der Platte (200), daß dieselbe von einem Typ ist, welcher sowohl wiederbeschreibbar als auch einmal-beschreibbar ist;
eine Einrichtung in dem Datenspeicherungsgerät zum Identifizieren der Platte (200) als ein Typ, der sowohl wiederbeschreibbar als auch einmal-beschreibbar ist, aus dem Plattentyp-Identifikationsbyte; und
eine Einrichtung zum unwiderruflichen Verhindern, daß irgendeiner der Speicherungszustände der Platte (200), wenn die Identifikation durchgeführt worden ist, von dem Nur-Lesen-Zustand in den beschreibbaren Zustand verändert wird.

2. Das System gemäß Anspruch 1, das ferner eine Einrichtung zum Verändern des Speicherungszustands in den Nur-Lesen-Zustand aufweist, wenn der Abschnitt zum ersten Mal beschrieben worden ist.

3. Das System gemäß Anspruch 1, bei dem die Mehrzahl von vordefinierten Abschnitten des Datenspeicherungsmediums Datenspeicherungssektoren aufweist.

4. Das System gemäß Anspruch 3, bei dem die Speicherungsdatenbiteinrichtung ein Bit in einem Sektormarkierungsfeld der Datenspeicherungssektoren aufweist.

5. Das System gemäß Anspruch 3, bei dem die Speicherungsdatenbiteinrichtung ein Bit in einem Datenfeld der Datenspeicherungssektoren aufweist.

6. Das System gemäß Anspruch 1, bei dem das Plattentyp-Identifikationsbyte ein vordefiniertes Bit in der Steuerspur der wiederbeschreibbaren Platte (200) aufweist.

7. Ein Verfahren zum Definieren einer wiederbeschreibbaren optischen Platte (200) als einmal-beschreibbar unter Verwendung einer Steuerspur (204) und zum Speichern von Daten auf derselben, wobei das Verfahren folgende Schritte aufweist:
Definieren eines Plattentyps, welcher sowohl wiederbeschreibbar als auch einmal-beschreibbar ist, durch ein Plattentyp-Identifikationsbyte in der Steuerspur (204) der Platte (200);
Unterteilen der Platte in eine Mehrzahl von Abschnitten, wobei jeder der Abschnitte als beschreibbarer oder Nur-Lesen-Abschnitt definierbar ist;
Definieren eines Speicherungszustandsbits für jeden der Abschnitte zum Angeben, ob der zugeordnete Abschnitt ein beschreibbarer oder ein Nur-Lesen-Abschnitt ist;
Untersuchen des Plattentyps und des Speicherungszustandsbits vor einer Schreibeoperation auf einen der unterteilten Abschnitte;
wenn das Plattentyp-Identifikationsbyte angibt, daß die Platte von dem Typ ist, der sowohl wiederbeschreibbar als auch einmal-beschreibbar ist, und wenn das Speicherungszustandsbit ferner anzeigt, daß der Abschnitt bereits in sich gespeicherte Daten aufweist, Aufheben der Schreibeoperation; und
wenn das Plattentyp-Identifikationsbyte angibt, daß die Platte von dem Typ ist, der sowohl wiederbeschreibbar als auch einmal-beschreibbar ist, und wenn das Speicherungszustandsbit ferner anzeigt, daß der Abschnitt keine in sich gespeicherten Daten aufweist, Fortführen der Schreibeoperation, und nachdem die Schreibeoperation vollendet ist, unwiderrufliches Setzen des Speicherungszustandsbits, um anzuzeigen, daß Daten in demselben gespeichert worden sind.

8. Das Verfahren gemäß Anspruch 7, das ferner den folgenden Schritt aufweist:
Definieren der Abschnitte als Sektoren innerhalb der Platte.

9. Das Verfahren gemäß Anspruch 8, das ferner folgenden Schritt aufweist:
Definieren des Speicherungszustandsbits in einem Sektormarkierungsfeld in dem Sektor.

10. Das Verfahren gemäß Anspruch 8, das ferner den folgenden Schritt aufweist:
Definieren des Speicherungszustandsbits in einem Datenfeld in dem Sektor.

## Revendications

1. Système de lecture et d'écriture de données sur disque optique, qui permet à un disque optique réinscriptible d'être défini, au moins sur certaines parties de celui-ci, comme un disque non effaçable, ledit système comprenant :
un dispositif (126) de mémorisation des données servant à lire et à écrire lesdites données ; et
un disque optique (200) non effaçable disposé dans ledit dispositif (126) de mémorisation des données ;
ledit disque optique (200) comprenant :
une piste de commande (204)
et un moyen binaire des données de mémorisation permettant de définir un état de mémorisation pour chacune des différentes parties prédéfinies de mémorisation des données du disque (200), chaque état de mémorisation indiquant que sa partie associée est inscriptible ou à lecture seule ;
ledit dispositif (126) de mémorisation des données comprenant :
un moyen pour empêcher l'écriture sur l'une quelconque desdites parties prédéfinies dudit disque (200), lorsque ledit état de mémorisation indique que la partie est dans un état de lecture seule ;
caractérisé par un octet d'identification du type de disque dans la piste de commande dudit disque optique servant à définir le disque (200) comme étant d'un type à la fois réinscriptible et non effaçable ;
et un moyen dans ledit dispositif de mémorisation des données servant à identifier le disque (200) comme étant du type à la fois réinscriptible et non effaçable, à partir dudit octet d'identification du type de disque ; et
un moyen servant à empêcher de façon irrévocable l'un quelconque des états de mémorisation du disque (200), lorsque ladite identification a été effectuée, d'être modifié en passant de l'état de lecture seule à l'état inscriptible.

2. Système selon la revendication 1, comprenant en outre un moyen servant à modifier ledit état de mémorisation en état de lecture seule lorsque ladite partie est d'abord écrite.

3. Système selon la revendication 1, dans lequel ladite pluralité de parties prédéfinies desdits supports de mémorisation des données comprend des secteurs de mémorisation des données.

4. Système selon la revendication 3, dans lequel ledit moyen binaire des données de mémorisation comprend un bit dans un champ de marques de secteur desdits secteurs de mémorisation des données.

5. Système selon la revendication 3, dans lequel ledit moyen binaire des données de mémorisation comprend un bit dans un champ de données desdits secteurs de mémorisation des données.

6. Système selon la revendication 1, dans lequel ledit octet d'identification du type de disque comprend un bit prédéfini dans ladite piste de commande dudit disque (200) réinscriptible.

7. Processus permettant de définir un disque optique réinscriptible (200) en tant que disque non effaçable en utilisant une piste de commande (204) et servant à mémoriser des données sur ce disque, ledit processus comprenant les phases consistant :
à définir un type de disque qui -est à la fois un disque réinscriptible et un disque non effaçable, par un octet d'identification du type de disque dans ladite piste de commande (204) dudit disque (200) ;
à subdiviser ledit disque en une pluralité de parties, chacune desdites parties étant définissable comme étant inscriptible ou à lecture seule ;
à définir un bit d'état de mémorisation pour chacune desdites parties afin d'indiquer si la partie associée est inscriptible ou à lecture seule ;
à examiner ledit type de disque et ledit bit d'état de mémorisation avant une opération d'écriture sur une desdites parties subdivisées ;
lorsque ledit octet d'identification du type de disque indique que le disque est du type à la fois réinscriptible et non effaçable, et lorsque ledit bit d'état de mémorisation indique également que ladite partie contient déjà des données mémorisées sur celle-ci, à annuler ladite opération d'écriture ; et
lorsque ledit octet d'identification du type de disque indique que le disque est du type à la fois réinscriptible et non effaçable, et lorsque ledit bit d'état de mémorisation indique également que ladite partie ne contient pas de données mémorisées sur celle-ci, à procéder à ladite opération d'écriture, et une fois que ladite opération d'écriture est achevée, à mettre à 1, de façon irrévocable, ledit bit d'état de mémorisation pour indiquer que des données ont été mémorisées sur cette partie.

8. Processus selon la revendication 7, comprenant en outre la phase consistant :
à définir lesdites parties comme des secteurs à l'intérieur dudit disque.

9. Processus selon la revendication 8, comprenant en outre la phase consistant :
à définir ledit bit d'état de mémorisation dans un champ de marques de secteur dudit secteur.

10. Processus selon la revendication 8, comprenant en outre la phase consistant :
à définir ledit bit d'état de mémorisation dans un champ de données dudit secteur.
